# EUROPÄISCHE PATENTANMELDUNG

(11) **EP 2 587 260 A1**
(43) Veröffentlichungstag der Anmeldung: **01.05.2013**
(21) Anmeldenummer: 11187027.5
(22) Anmeldetag: 28.10.2011
(51) Int. Cl.: G01N 29/04, G01N 29/32, G01N 29/34

(54) **Vermeidung von Spätheimkehrerechos bei der Ultraschallprüfung**

(71) Anmelder: Siemens Aktiengesellschaft, 80333 München (DE)
(72) Erfinder: Borgmann, Christian, 46284 Dorsten (DE); Clossen-von Lanken Schulz, Michael, 47661 Issum (DE); Obermayr, Stefan, 45475 Mülheim (DE)

(57) **Zusammenfassung**

Es wird ein Verfahren zum Durchführen von Ultraschallscans an einem Untersuchungsobjekt (3) zur Verfügung gestellt, in dem nacheinander mittels eines Prüfkopfes (1) Ultraschallpulse in das Untersuchungsobjekt (3) zum Generieren von Pulsechos eingebracht werden und die Pulsechos detektiert werden. Dabei wird erfindungsgemäß der Prüfkopf (1) bei einem ersten Ultraschallpuls zweier aufeinander folgender Ultraschallpulse mit einer ersten Wellenform (W1) und bei einem zweiten Ultraschallpuls der zwei aufeinander folgenden Ultraschallpulse mit einer von der ersten Wellenform (W1) verschiedenen zweiten Wellenform (W2) angeregt. Die detektierten Pulsechos werden dann jeweils mit der ersten und der zweiten Wellenform (W1, W2) verknüpft und in Abhängigkeit von einem jeweiligen Verknüpfungsergebnis entweder dem ersten oder dem zweiten Ultraschallpuls der zwei aufeinander folgenden Ultraschallpulse zugeordnet.

## Beschreibung

Die vorliegende Erfindung betrifft ein Verfahren zum Durchführen von Ultraschallscans an einem Untersuchungsobjekt, in welchem nacheinander mittels eines Prüfkopfs eine Mehrzahl von Ultraschallpulsen in das Untersuchungsobjekt eingebracht werden.

Die zerstörungsfreie Prüfung von Werkstücken spielt eine wichtige Rolle bei der Qualitätssicherung und Wartung von aufwendig herzustellenden Produkten wie beispielsweise ein Rotor einer Dampfturbine. Der Herstellungsprozess für derartige Rotoren ist anspruchsvoll und aufwendig. Das Zerstören eines Werkstücks im Rahmen der Qualitätskontrolle ist daher nicht wünschenswert. Weiterhin ist es wünschenswert, jedes hergestellte Werkstück auf seine Qualität hin zu überprüfen, was eine zerstörungsfreie Prüfung erfordert. Aber auch im Rahmen der Wiederaufarbeitung von verschlissenen Werkstücken (refurbishment) kommen häufig zerstörungsfreie Prüfungsverfahren zum Einsatz, um die innere Integrität des Gefüges des Werkstücks überprüfen zu können, bevor darüber entschieden wird, ob ein Wiederaufarbeiten möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innern des Untersuchungsobjektes reflektierter Signale eine Aussage über das Gefüge im Inneren, insbesondere über Defekte abgeleitet. Bei einem Ultraschallscan wird Ultraschall in zeitlich kurzen Abständen, die durch die sogenannte Puls-Folge-Frequenz bestimmt sind (PRF: puls recurrence frequency), in das Untersuchungsobjekt eingebracht. Ein wichtiges Beispiel hierfür stellen Ultraschall-Winkelscans dar, bei denen die einzelnen Ultraschallpulse mit unterschiedlichen Einschallwinkeln in das Untersuchungsobjekt eingebracht werden. Die Erfindung kann aber auch auf anderen Arten von Ultraschallscans wie Linescans oder auch bei der Verwendung von einfachen Puls-Echo-Prüfköpfen eingesetzt werden.

Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Ein Verfahren und eine Vorrichtung zum Erzeugen eines Ultraschallbildes ist beispielsweise in EP 2 120 045 A1 beschrieben. In dem darin beschriebenen Verfahren erfolgt das Aufnehmen eines Ultraschallbildes anhand von Winkelscans, die an verschiedenen Orten des Untersuchungsobjektes durchgeführt werden. Jeder Winkelscan wird dabei in einem Winkelbereich von -40° bis + 40° in 21 Schritten von je 4° durchgeführt. Aus den einzelnen Winkelscans wird dann ein Bild des Inneren des Untersuchungsobjektes erstellt.

Bei derartigen, auf der Reflektion von Ultraschallpulsen beruhenden Verfahren entstehen bei vielen Prüfobjekten jedoch Wiederholungsechos, die wegen der geringen Abschwächung des Ultraschallpulses beim Durchlaufen des Untersuchungsobjektes nach mehrmaliger Reflektion den Prüfkopf erreichen. Dabei kann es vorkommen, dass diese Pulsechos zeitlich den Prüfkopf erst erreichen, nachdem bereits weitere Ultraschallpulse ausgelöst wurden. Die Laufzeit der Wiederholungsechos kann dabei so hoch sein, dass das Wiederholungsecho den Prüfkopf erst während eines nachfolgenden Ultraschall-Winkelscans erreicht. Die Wiederholungsechos können dabei fälschlicherweise als Echo des zuletzt eingeschallten Pulses registriert werden, wodurch die Ergebnisse des Prüfungsverfahrens verfälscht werden.

Das beschriebene Phänomen kann vermieden werden, indem die Puls-Folge-Frequenz auf einen niedrigen Wert eingestellt wird, sodass Wiederholungsechos vor dem Aussenden des folgenden Ultraschallpulses beim Messkopf eingehen. In der Praxis führt dies jedoch zu unakzeptabel niedrigen Messraten und daher zu unakzeptablen Messdauern.

Aufgabe der vorliegenden Erfindung ist es daher, ein vorteilhaftes Verfahren zum Durchführen von Ultraschallscans an einem Untersuchungsobjekt zur Verfügung zu stellen, in welchem die Gefahr von Verwechslungen von Wiederholungsechos mit Pulsechos vermieden wird oder zumindest verringert ist.

Diese Aufgabe wird durch ein Verfahren zum Durchführen von Ultraschallscans nach Anspruch 1 und durch eine Vorrichtung nach Anspruch 9 gelöst. Die abhängigen Ansprüche enthalten die vorteilhaften Ausgestaltungen der Erfindungen.

In dem erfindungsgemäßen Verfahren zum Durchführen von Ultraschallscans an einem Untersuchungsobjekt werden nacheinander mittels eines Prüfkopfes Ultraschallpulse in das Untersuchungsobjekt zum Generieren von Pulsechos eingebracht und die Pulsechos detektiert. Dabei wird erfindungsgemäß der Prüfkopf bei einem ersten Ultraschallpuls zweier aufeinander folgender Ultraschallpulse mit einer ersten Wellenform und bei einem zweiten Ultraschallpuls der zwei aufeinander folgenden Ultraschallpulse mit einer von der ersten Wellenform verschiedenen zweiten Wellenform angeregt. Die detektierten Pulsechos werden dann jeweils mit der ersten und der zweiten Wellenform verknüpft und in Abhängigkeit von einem jeweiligen Verknüpfungsergebnis entweder dem ersten oder dem zweiten Ultraschallpuls der zwei aufeinander folgenden Ultraschallpulse zugeordnet.

Die Erfindung ermöglicht, Spätheimkehrerechos zu erkennen und dem tatsächlich ursächlichen vorhergehenden Ultraschallpuls zuzuordnen. Dadurch können falsche Pulsechos, die andernfalls als ein Defekt im Inneren des Untersuchungsobjektes interpretiert werden könnten, eliminiert werden. Dies kann beispielsweise geschehen, indem die einem vorhergehenden Ultraschallpuls zuzuordnenden Spätheimkehrerechos bei einer bildlichen Darstellung ignoriert werden. Alternativ ist es aber auch möglich, die Spätheimkehrerechos so bildlich darzustellen, dass sie dem tatsächlich ursächlichen Ultraschallpuls auch bildlich zugeordnet werden.

Bevorzugt kann die Verknüpfung eine Korrelation der detektierten Pulsechos mit der ersten beziehungsweise zweiten Wellenform umfassen. Hierzu ist beispielsweise die Kreuzkorrelation bekannt, bei der die beiden zu korrelierenden Wellenformen miteinander multipliziert und dann integriert werden, um einen Ergebniswert zu erhalten. Diese Operation wird für eine Vielzahl von unterschiedlichen Verschiebungen zwischen den beiden Wellenformen durchgeführt und die so erhaltenen Ergebniswerte als Funktion der Verschiebungswerte angesehen. Lokale oder globale Maxima in der so erhaltenen Ergebnisfunktion bedeuten eine besonders hohe Übereinstimmung zwischen den miteinander verknüpften Wellenformen hin - hier also zwischen entweder der ersten oder der zweiten Wellenform einerseits und der Wellenform der detektierten Ultraschallechos andererseits - und können als Hinweis für ein Pulsecho eines Ultraschallpulses der entsprechenden Wellenform angesehen werden. Erwartungsgemäß wird die Ergebnisfunktion der Korrelation der jeweils anderen zur Anregung verwendeten Wellenform mit der Wellenform des detektierten Pulsechos für dieselbe Verschiebung einen geringeren Wert aufweisen.

Alternativ oder zusätzlich kann die Verknüpfung auch eine Spektraltransformation der Pulsechos und/oder der ersten beziehungsweise zweiten Wellenform umfassen. Hierbei können insbesondere der Fourier-Analysis entlehnte Spektraltransformationen und deren optimierte Implementationsformen wie Fast Fourier Transform (FFT) Discrete Cosine Transform (DCT) zum Einsatz kommen. Die Spektraltransformation ermöglicht eine einfache Filterung sowie eine Zuordnung der Pulsechos zu einer ursächlichen Wellenform, beispeilsweise anhand der Verläufe der Spektralintensitäten bei ganzzahligen Vielfachen der Grundfrequenz der Anregung.

Die erste und die zweite Wellenform können beispielsweise eine Sinusanregung, eine Sägezahnanregung oder eine Trapezanregung sein, wobei für jeden der aufeinander folgenden Ultraschallpulse eine unterschiedliche Wellenform der genannten Beispiele ausgewählt wird.

Besonders bevorzugt sind die erste Wellenform und die zweite Wellenform zueinander orthogonal. Dies bedeutet, dass das Integral des Produktes der ersten und der zweiten Wellenform gleich Null ist, und ermöglicht eine besonders eindeutige Zuordnung der Pulsechos zu einer der beiden Wellenformen. Diese Ausführungsform des erfinderischen Verfahrens wird besonders bevorzugt mit einer Verknüpfung verwendet, die eine Korrelation umfasst. In einem solchen Fall ist zu erwarten, dass ein Maximum in der Ergebnisfunktion der Korrelation eines detektierten Pulsechos mit einer der beiden Wellenformen einem besonders geringen Wert in der Ergebnisfunktion der Korrelation mit der jeweils anderen der beiden Wellenformen gegenübersteht.

Vorzugsweise wird die Verknüpfung in Echtzeit durchgeführt. Hierfür können beispielsweise moderne rechenstarke Digitale Signalprozessoren (DSP) verwendet werden. Die Verknüpfung in Echtzeit hat den Vorteil, dass eine schnelle Überprüfung der Integrität des Untersuchungsobjektes möglich wird. Alternativ können die bei der Durchführung des Verfahrens anfallenden Daten auch aufgezeichnet und später der Verknüpfung unterzogen werden. Dies erlaubt die Verwendung weniger rechenkräftiger Prozessoren oder aber umso rechenintensiverer Verknüpfungsalgorithmen.

Für jeden Ultraschallpuls kann die Zeitdauer vom Einschallen des Ultraschallpulses bis zum Empfang des oder der dem jeweiligen Ultraschallpuls in Abhängigkeit des jeweiligen Verknüpfungsergebnis zugeordneten detektierten Pulsechos und/oder die Intensität des zugeordneten detektierten Pulsechos an eine Auswerteroutine weitergeleitet werden. Die Auswerteroutine kann dann aus den erhaltenen Daten eine Bilddarstellung des Inneren des Untersuchungsobjekts generieren. Anhand einer derartigen Bilddarstellung kann eine rasche Qualitätsprüfung des untersuchten Gegenstandes erfolgen. Bei einer Ausführungsform der Erfindung, bei der die genannte Verknüpfung in Echtzeit durchgeführt wird, kann die Bilddarstellung auch online mit dem Ergebnis der Verknüpfung und der Zuordnung der Pulsechos zu den Ultraschallpulsen erfolgen.

Die erste und/oder die zweite Wellenform können auch ein Modulationssignal sein. Hierbei stehen die bekannten Modulationsverfahren zur Verfügung. Die Verwendung von Modulationssignalen erlaubt ebenfalls eine einfache Zuordnung von Pulsechos zu den ursächlichen Ultraschallpulsen.

Ein zweiter Aspekt der Erfindung führt eine Vorrichtung zum Durchführen von Ultraschallscans an einem Untersuchungsobjekt ein. Die Vorrichtung weist einen Prüfkopf und eine mit dem Prüfkopf verbundene Verknüpfungseinheit auf. Der Prüfkopf ist ausgebildet, einen ersten Ultraschallpuls zweier aufeinander folgender Ultraschallpulse mit einer ersten Wellenform zu erzeugen und einen zweiten Ultraschallpuls der zwei aufeinander folgenden Ultraschallpulse mit einer von der ersten Wellenform verschiedenen zweiten Wellenform zu erzeugen. Außerdem ist der Pulskopf ausgebildet, Pulsechos zu detektieren und die detektierten Pulsechos an die Verknüpfungseinheit zu geben. Die Verknüpfungseinheit ist dabei ausgebildet, die detektierten Pulsechos jeweils mit der ersten und der zweiten Wellenform zu verknüpfen und die detektierten Pulsechos in Abhängigkeit von einem jeweiligen Verknüpfungsergebnis entweder dem ersten oder dem zweiten Ultraschallpuls der zwei aufeinander folgenden Ultraschallpulse zuzuordnen.

Zwar wurde die vorliegende Erfindung im Hinblick auf die Vermeidung von Wiederholungsechos ohne Verringerung der Puls-Folge-Frequenz beschrieben, jedoch besteht auch die Möglichkeit, die Puls-Folge-Frequenz zu erhöhen, ohne das Risiko von unerkannten Wiederholungsechos gegenüber den im Stand der Technik verwendeten Verfahren zu erhöhen. Dadurch kann die Messrate erhöht und somit die Dauer einer Messung verringert werden.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt das Einschallen einer Pulsfolge in ein Untersuchungsobjekt im Rahmen eines Ultraschall-Winkelscans in einer schematischen Darstellung.
Figur 2 zeigt Beispiele für Wellenformen der im Rahmen eines Ultraschallscans eingeschallten Ultraschallpulse.

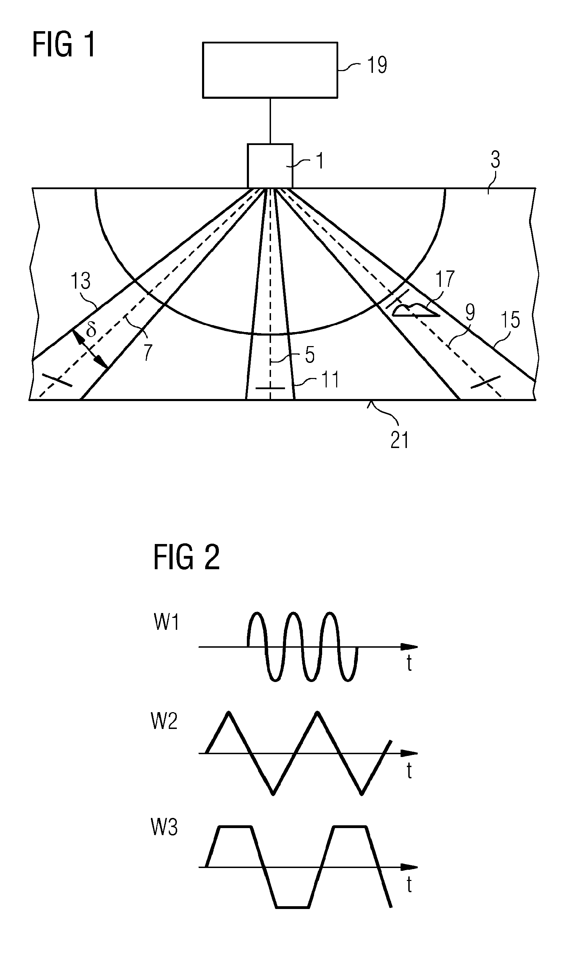

Das erfindungsgemäße Verfahren wird nachfolgend unter Bezugnahme auf die Figuren 1 und 2 näher erläutert. Dabei werden beispielhaft Ultraschall-Winkelscans als Ausführungsbeispiele dargelegt, die Erfindung kann jedoch auch für alle anderen Arten von Ultraschallscans vorteilhaft verwendet werden.

Figur 1 zeigt in einer schematisierten Darstellung das Einschallen von Ultraschallpulsen mittels eines Prüfkopfes 1 in ein Untersuchungsobjekt 3, dass beispielsweise ein Schmiedeteil wie etwa ein Rotor einer Dampfturbine sein kann.

Ausgehend vom Ultraschallprüfkopf 1 werden zum Durchführen eines Ultraschall-Winkelscans nacheinander Ultraschallpulse unter einer Vielzahl von Einschallwinkeln in das Untersuchungsobjekt 3 eingeschallt. In der Figur sind dabei drei unter verschiedenen Einschallwinkeln eingeschallte Ultraschallpulse anhand ihrer Schallkegel 11,13, 15 exemplarisch dargestellt. Die Einschallrichtungen der Pulse sind in der Figur als Mittelachsen 5, 7, 9 der die Ultraschallpulse repräsentierenden Schallkegel 11, 13, 15 dargestellt. Es sei an dieser Stelle darauf hingewiesen, dass die tatsächliche Zahl an Einschallpulsen, die unter verschiedenen Einschallwinkeln in das Untersuchungsobjekt eingeschallt werden in der Regel deutlich größer ist als drei.

Ultraschallpulse breiten sich in einem kontinuierlichen Medium entlang einer Ausbreitungsrichtung aus und weisen ein Intensitätsmaximum auf. Die Intensität des Ultraschallpulses nimmt senkrecht zur Ausbreitungsrichtung beiderseits des Intensitätsmaximums schnell ab. Üblicherweise wird eine Begrenzung des Ultraschallpulses an denjenigen Abständen vom Intensitätsmaximum definiert, bei denen die Intensität gegenüber dem jeweiligen Intensitätsmaximum um einen bestimmten Betrag beziehungsweise Faktor abgenommen hat. Die Begrenzung des Ultraschallpulses beschreibt dabei einen Winkel, der als Öffnungswinkel δ bezeichnet wird, der dem Divergenzwinkel des Prüfkopfes 1 entspricht.

Die in das Untersuchungsobjekt 3 eingeschallten Ultraschallpulse erzeugen Echos, aus denen ein Bild der inneren Struktur des Untersuchungsobjektes 3 gewonnen werden kann. Hierzu werden Pulsechos der eingeschallten Ultraschallpulse detektiert und im Hinblick auf ihre Intensität und die Richtung, aus der das Echo den Prüfkopf 1 erreicht, analysiert.

Aus dem Analyseergebnis erstellt die Auswerteeinheit, die beispielsweise gemeinsam mit einer Verknüpfungseinheit 19 als Digitaler Signalprozessor (DSP) oder als Application Specific Integrated Circuit (ASIC) realisiert sein kann, dann ein Bild der inneren Struktur des Untersuchungsobjektes 3.

Beim Erstellen des Bildes vom Inneren des Untersuchungsobjektes 3 wird in Richtung jedes Einschallwinkels ein sogenannter A-Scan (Amplitudenscan)durchgeführt, in dem die Amplitudenhöhe als Funktion der Laufzeit vom Einschallen des Pulses bis zum Empfang des Echos gemessen wird. Anschließend wird das Bild aus den unter den verschiedenen Einschallwinkeln des Winkelscans gewonnenen A-Scans zusammengesetzt. Liegen alle Einschallwinkel innerhalb einer Ebene, so entspricht das zusammengesetzte Bild einem sogenannten B-Scan oder Sektorscan, dem Bild eines zweidimensionalen Schnittes durch das Untersuchungsobjekt 3. Aus mehreren parallel verlaufenden B-Scans kann dann bspw. ein dreidimensionales Bild des Untersuchungsobjektes 3 gewonnen werden.

Zum eigentlichen Durchführen des Winkelscans werden Ultraschallpulse in zeitlich kurzen Abständen, die durch die Puls-Folge-Frequenz bestimmt sind, mit unterschiedlichen Einschallwinkeln in das Untersuchungsobjekt 3 eingebracht. Dabei entstehen Pulsechos an inneren Strukturen des Untersuchungsobjektes, die als Reflektor 17 fungieren. Dies können beispielsweise Risse oder Kavitäten innerhalb der Gefügestruktur des Untersuchungsobjektes 3 sein.

Aus der Laufzeit bis zum Empfang des Impulsechos kann die Entfernung des Reflektors 17 zum Prüfkopf 1 bestimmt werden. Die Ausrichtung des Prüfkopfes 1 in dem Moment, als der für das empfangene Impulsecho ursächliche Ultraschallpuls ausgesendet wurde, liefert dann die verbleibenden Raumkoordinaten, so dass der Ort des Reflektors 17 abgeleitet werden kann. Dies gelingt jedoch nur dann korrekt, wenn das Impulsecho nicht von einem während einer anderen Ausrichtung des Prüfkopfes 1 ausgesendeten früheren Ultraschallpuls erzeugt wurde, beispielsweise als Spätheimkehrerecho an einer entfernten Wandung des Untersuchungsobjektes 3. In einem solchen Fehlerfall würde ein deutlich näher am Prüfkopf 1 und in einer anderen Richtung als die des tatsächlichen Ursprungsortes des Impulsechos gelegener Reflektor angenommen, der jedoch gar nicht existiert.

Bei vielen Untersuchungsobjekten entstehen nämlich nicht nur Echos an inneren Strukturen des Untersuchungsobjektes 3, sondern beispielsweise auch an der Wand 21 des Untersuchungsobjektes 3, die das Untersuchungsobjekt durchwandern und schließlich den Prüfkopf 1 erreichen können. Diese Echos liefern jedoch keine relevante Information über das innere Gefüge des Untersuchungsobjektes 3. Allerdings können diese Folgeechos den Winkelscan stören, wenn sie zeitlich den Prüfkopf 1 erst dann erreichen, wenn weitere Ultraschallpulse (nachfolgend Folgepulse genannt) bereits in das Untersuchungsobjekt 3 eingeschallt sind oder sogar ein nachfolgender Ultraschallscan begonnen wurde. Wenn das Wiederholungsecho dann aus einer Richtung eintrifft, die ungefähr der Einschallrichtung eines Folgepulses entspricht, kann das Wiederholungsecho fälschlicherweise als Echo des Folgepulses missinterpretiert werden, was zu einem Fehler im A-Scan des Folgepulses - und damit zu einem Fehler im Bild des Untersuchungsobjektes 3 - führen kann.

Im Rahmen der vorliegenden Erfindung erfolgt das Einschallen aufeinander folgender Ultraschallpulse in das Untersuchungsobjekt 3 mit unterschiedlichen Wellenformen, die eine Zuordnung eines empfangenen Impuls- oder Pulsechos zu dem jeweils ursächlichen Ultraschallpuls anhand der Wellenform des Pulsechos erlauben. Die Erfindung beruht dabei auf der Einsicht, dass die Wellenform des Pulsechos durch die Wellenform des eingeschallten Ultraschallpulses maßgeblich bestimmt wird. Durch die Zuordnung der Pulsechos zu einem der vorhergehenden Ultraschallpulse wird der Folgescan für verfälschende Wiederholungsechos des vorhergehenden Ultraschallpulses oder der vorhergehenden Ultraschallpulse unempfindlich. Selbstredend kann die Erfindung auch dergestalt ausgeführt werden, dass beispielsweise drei oder mehr aufeinanderfolgende Ultraschallpulse jeweils eine eindeutig zugeordnete Wellenform, die sich von den Wellenformen der anderen Ultraschallpulse unterscheiden, erhalten und die detektierten Pulsechos mit entsprechend vielen Wellenformen verknüpft und einem der Ultraschallpulse zugeordnet werden. Dadurch lassen sich noch höhere Messraten erzielen, da die Ultraschallpulse in entsprechend dichterer Folge in das Untersuchungsobjekt 3 eingeschallt werden können, ohne dass zu befürchten wäre, dass ein von einem noch weiter zurückliegenden Ultraschallpuls erzeugtes Pulsecho die Untersuchung stört. Eine solche Ausführungsform der Erfindung wäre beispielsweise besonders für die Ultraschalluntersuchung von großen Untersuchungsobjekten geeignet, bei denen jedoch nur ein relativ kleiner Bereich unter der Oberfläche des Untersuchungsobjektes untersucht werden muss. Ein Beispiel für eine solche Ausführungsform der Erfindung wird weiter unten anhand einer Tabelle erläutert.

Figur 2 zeigt Beispiele für Wellenformen der im Rahmen eines Ultraschallscans eingeschallten Ultraschallpulse. Die Abbildung zeigt beispielhaft drei Wellenformen W1, W2 und W3 als Funktion der Zeit t. Die Wellenform W1 besitzt Sinusform, wobei je nach Anwendungsfall unterschiedliche Anzahlen von Sinusschwingungen vorgesehen sein können. Prinzipiell könnte auch nur eine einzelne Sinusschwingung eingesetzt werden. Die Wellenform W2 zeigt einen Sägezahnverlauf, wobei auch hier ohne Einschränkung der Allgemeinheit der Erfindung mehrere Schwingungsperioden gezeigt werden. Entsprechendes gilt auch für die Wellenform W3, die einen trapezförmigen Verlauf besitzt. Wird ein Ultraschallpuls mit einer der Wellenformen W1, W2 oder W3 in ein Untersuchungsobjekt eingeschallt, so ist zu erwarten, dass auch ein durch einen Reflektor hervorgerufenes Pulsecho eine von der Wellenform des Ultraschallpulses abhängige Form besitzt. Idealerweise wird die Wellenform des Pulsechos derjenigen des anregenden Ultraschallpulses entsprechen, allerdings muss in der Realität von Verzerrungen und Beeinträchtigungen der Wellenform während des Durchwanderns des Untersuchungsobjektes und bei der Reflektion ausgegangen werden. Diesem Aspekt kann nach den Umständen des Einzelfalls durch Auswahl einer geeigneten Verknüpfungsmethode Rechnung getragen werden.

Ein Beispiel für eine Ausführungsform der Erfindung mit drei verschiedenen Wellenformen W1, W2 und W3 - beispielsweise den drei in Fig. 2 gezeigten Wellenformen - wird durch die nachfolgende Tabelle genauer erläutert. Das in der Tabelle dargestellte Beispiel betrifft dabei den Fall eines Ultraschall-Winkelscans, kann jedoch auch auf andere Arten von Ultraschallscans wie beispielsweise Linescans übertragen werden. In dieser Tabelle gibt die erste Spalte die chronologische Reihenfolge der in das Untersuchungsobjekt eingeschallten Pulse, die zweite Spalte die verwendete Wellenform und die dritte Spalte den Einschallwinkel.

| Puls Nr. | Wellenform | Einschallwinkel |
|---|---|---|
| 1 | W1 | -28° |
| 2 | W2 | -26° |
| 3 | W3 | -24° |
| 4 | W1 | -22° |
| 5 | W2 | -20° |
| 6 | W3 | -18° |
| 7 | W1 | -16° |
| 8 | W2 | -14° |
| 9 | W3 | -12° |
| 10 | W1 | -10° |
| 11 | W2 | -8° |
| 12 | W3 | -6° |
| 13 | W1 | -4° |
| 14 | W2 | -2° |
| 15 | W3 | 0° |
| 16 | W1 | +2° |
| 17 | W2 | +4° |
| 18 | W3 | +6° |
| 19 | W1 | +8° |
| 20 | W2 | +10° |
| 21 | W3 | +12° |
| 22 | W1 | +14° |
| 23 | W2 | +16° |
| 24 | W3 | +18° |
| 25 | W1 | +20° |
| 26 | W2 | +22° |
| 27 | W3 | +24° |
| 28 | W1 | +26° |
| 29 | W2 | +28° |

In dem in der Tabelle dargestellten Beispiel wird ein B-Scan aus 29 A-Scans gewonnen, wobei die Gesamtheit aller A-Scans einen Winkelbereich von -28° bis +28° in 2°-Schritten abdeckt. Die Einschallwinkel werden in monotoner Folge, im vorliegenden Beispiel in monoton steigender Folge von -28° bis +28° durchgescannt, prinzipiell ist aber jede beliebige Reihenfolge von Einschallwinkeln im Rahmen der Erfindung einsetzbar. Die Erfindung ermöglicht eine besonders schnelle Pulsfolge und im Fall eines Ultraschall-Winkelscans einen besonders schnellen Durchlauf der Einschallwinkel, ohne eine Beeinträchtigung durch Spätheimkehrerechos befürchten zu müssen.

Die vorliegende Erfindung wurde unter Bezugnahme auf die Figuren 1 und 2 anhand konkreter Ausführungsbeispiele beschrieben. Abwandlungen von diesen Ausführungsbeispielen sind jedoch möglich.

## Patentansprüche

1. Ein Verfahren zum Durchführen von Ultraschallscans an einem Untersuchungsobjekt (3), in dem nacheinander mittels eines Prüfkopfes (1) Ultraschallpulse in das Untersuchungsobjekt (3) zum Generieren von Pulsechos eingebracht werden und die Pulsechos detektiert werden,
**dadurch gekennzeichnet, dass**
der Prüfkopf (1) bei einem ersten Ultraschallpuls zweier aufeinander folgender Ultraschallpulse mit einer ersten Wellenform (W1) angeregt und bei einem zweiten Ultraschallpuls der zwei aufeinander folgenden Ultraschallpulse mit einer von der ersten Wellenform (W1) verschiedenen zweiten Wellenform (W2) angeregt wird, und dass
die detektierten Pulsechos jeweils mit der ersten und der zweiten Wellenform (W1, W2) verknüpft und in Abhängigkeit von einem jeweiligen Verknüpfungsergebnis entweder dem ersten oder dem zweiten Ultraschallpuls der zwei aufeinander folgenden Ultraschallpulse zugeordnet werden.

2. Das Verfahren nach dem vorhergehenden Anspruch,
bei dem die Verknüpfung eine Korrelation der detektierten Pulsechos mit der ersten beziehungsweise zweiten Wellenform (W1, W2) umfasst.

3. Das Verfahren nach einem der vorhergehenden Ansprüche,
bei dem die Verknüpfung eine Spektraltransformation der Pulsechos und/oder der ersten beziehungsweise zweiten Wellenform (W1, W2) umfasst.

4. Das Verfahren nach einem der vorhergehenden Ansprüche,
bei dem die erste Wellenform eine ausgewählte Wellenform von einer Sinusanregung (W1), einer Sägezahnanregung (W2) oder einer Trapezanregung (W3) und die zweite Wellenform eine verbleibende Wellenform der Sinusanregung (W1), der Sägezahnanregung (W2) oder der Trapezanregung (W3) sind.

5. Das Verfahren nach einem der Ansprüche 1 bis 3,
bei dem die erste Wellenform und die zweite Wellenform zueinander orthogonal sind.

6. Das Verfahren nach einem der vorhergehenden Ansprüche,
bei dem die Verknüpfung in Echtzeit durchgeführt wird.

7. Das Verfahren nach einem der vorhergehenden Ansprüche,
bei dem für jeden Ultraschallpuls die Zeitdauer vom Einschallen des Ultraschallpulses bis zum Empfang des oder der dem jeweiligen Ultraschallpuls in Abhängigkeit des jeweiligen Verknüpfungsergebnis zugeordneten detektierten Pulsechos und/oder die Intensität des zugeordneten detektierten Pulsechos an eine Auswerteroutine weitergeleitet wird bzw. werden und die Auswerteroutine daraus eine Bilddarstellung des Inneren des Untersuchungsobjekts (3) generiert.

8. Das Verfahren nach dem vorhergehenden Anspruch,
bei dem die erste und/oder die zweite Wellenform (W1, W2, W3) ein Modulationssignal ist/sind.

9. Eine Vorrichtung zum Durchführen von Ultraschallscans an einem Untersuchungsobjekt (3), die Vorrichtung aufweisend einen Prüfkopf (1) und eine mit dem Prüfkopf (1) verbundene Verknüpfungseinheit (19), wobei der Prüfkopf (1) ausgebildet ist, einen ersten Ultraschallpuls zweier aufeinander folgender Ultraschallpulse mit einer ersten Wellenform (W1) zu erzeugen und einen zweiten Ultraschallpuls der zwei aufeinander folgenden Ultraschallpulse mit einer von der ersten Wellenform (W1) verschiedenen zweiten Wellenform (W2) zu erzeugen, wobei der Pulskopf außerdem ausgebildet ist, Pulsechos zu detektieren und die detektierten Pulsechos an die Verknüpfungseinheit (19) zu geben, und wobei die Verknüpfungseinheit (19) ausgebildet ist, die detektierten Pulsechos jeweils mit der ersten und der zweiten Wellenform (W1, W2) zu verknüpfen und die detektierten Pulsechos in Abhängigkeit von einem jeweiligen Verknüpfungsergebnis entweder dem ersten oder dem zweiten Ultraschallpuls der zwei aufeinander folgenden Ultraschallpulse zuzuordnen.
